# EUROPÄISCHE PATENTSCHRIFT

(11) **EP 3 235 346 B1**
(45) Veröffentlichungstag und Bekanntmachung des Hinweises auf die Patenterteilung: **14.11.2018**
(21) Anmeldenummer: 15828478.6
(22) Anmeldetag: 16.12.2015
(51) Int. Cl.: H05B 33/08, H05B 37/02, H04B 3/54

(54) **BETRIEBSSCHALTUNG, BETRIEBSGERÄT, BELEUCHTUNGSSYSTEM UND VERFAHREN ZUM BETREIBEN WENIGSTENS EINER LEUCHTDIODE**
OPERATING CIRCUIT, OPERATING DEVICE, LIGHTING SYSTEM AND METHOD FOR OPERATING AT LEAST ONE LIGHT-EMITTING DIODE
CIRCUIT D'ALIMENTATION, APPAREILLAGE D'ALIMENTATION, SYSTÈME D'ÉCLAIRAGE ET PROCÉDÉ PERMETTANT DE FAIRE FONCTIONNER AU MOINS UNE DIODE ÉLECTROLUMINESCENTE

(30) Priorität: 17.12.2014 AT 4432014 U
(43) Veröffentlichungstag der Anmeldung: 25.10.2017
(73) Patentinhaber: Tridonic GmbH & Co. KG, 6851 Dornbirn (AT)
(72) Erfinder: PEREIRA, Eduardo, 8854 Siebnen (CH)
(74) Vertreter: Rupp, Christian
(86) Internationale Anmeldenummer: PCT/AT2015/050318
(87) Internationale Veröffentlichungsnummer: WO 2016/094920

(56) Entgegenhaltungen:
- EP-A1- 1 555 859
- WO-A1-2013/118451
- DE-U1-202012 100 843

## Beschreibung

Die Erfindung betrifft Betriebsschaltungen für Leuchtmittel. Die Erfindung betrifft insbesondere eine Betriebsschaltung zum Versorgen einer Leuchtdiode (LED) oder mehrerer LEDs, die für eine Verbindung mit einem Gleichspannungs(DC)-Bus eingerichtet ist, um mit einer DC-Versorgungsspannung versorgt zu werden, sowie Betriebsgeräte und Systeme, die eine derartige Betriebsschaltung umfassen, und Methoden zum Betreiben wenigstens einer Leuchtdiode.

Mit zunehmender Verbreitung von Leuchtmitteln wie LEDs, die beispielsweise auf einem LED-Modul angeordnet sein können, gewinnen Betriebsschaltungen für derartige Leuchtmittel weiter an Bedeutung. Betriebsschaltungen dienen hauptsächlich dazu, eine gewünschte Energieversorgung für das Leuchtmittel bereitzustellen. Betriebsschaltungen können beispielsweise einen Wandler umfassen, um einen LED-Strom auf einen Sollwert einzustellen. Zusätzliche Funktionen können in die Betriebsschaltung integriert sein.

Zur Vereinfachung und Kosteneinsparung ist es möglich, eine DC-Spannungsquelle vorzusehen, die eine DC-Versorgungsspannung erzeugt und an eine Betriebsschaltung oder mehrere Betriebsschaltungen über einen DC-Bus bereitstellt. Die Quelle kann beispielsweise eine Zentraleinheit sein, die einen AC/DC-Wandler umfasst und die DC-Versorgungsspannung erzeugt. Die Betriebsschaltungen sind separat von der Zentraleinheit vorgesehen. Die Betriebsschaltungen sind über einen DC-Bus mit der Zentraleinheit gekoppelt. Betriebsschaltungen für Leuchtdioden, die mit einer DC-Versorgungsspannung versorgt werden, können auch in zahlreichen anderen Szenarien Anwendung finden, beispielsweise wenn die Betriebsschaltung vorübergehend von einer lokalen DC-Spannungsquelle gespeist wird, wie dies in einem Notlicht-Betriebszustand der Fall sein kann, oder wenn die Betriebsschaltung mit einem photovoltaischen Modul verbunden ist.

Die Betriebsschaltung kann eine integrierte Halbleiterschaltung aufweisen, die die Betriebsschaltung steuert. Dazu kann die integrierte Halbleiterschaltung beispielsweise indem einen Schalter eines Wandlers oder anderen Stromreglers schalten.

Um verschiedene Steuerfunktionen realisieren zu können, wie beispielsweise Helligkeits- und/oder Farbsteuerung, und/oder um eine Übertragung von sicherheitsrelevanten oder anderen Informationen zu ermöglichen, ist es wünschenswert, dass derartige Betriebsschaltungen für eine Kommunikation eingerichtet sind.

DE 20 2013 100 843 U1 offenbart ein Steuergerät zum Ansteuern einer Lampeneinheit mit einem Modulator zum Modulieren einer Versorgungsspannung zum Übertragen einer Steuerinformation in digitaler Form an die Lampeneinheit.

EP 1 555 859 A1 offenbart die Ansteuerung von Leuchtmittelbetriebsgeräten über einen mittels Powerline modulierten DC-Bus.

Der Erfindung liegt die Aufgabe zugrunde, Vorrichtungen und Verfahren anzugeben, die eine Kommunikation zu und/oder von Betriebsschaltungen für wenigstens eine Leuchtdiode erlauben und die mit geringem Aufwand realisiert werden können. Der Erfindung liegt insbesondere die Aufgabe zugrunde, derartige Verfahren und Vorrichtungen anzugeben, bei denen mit geringem zusätzlichen Aufwand eine Betriebsschaltung, die für eine Kopplung mit einer DC-Versorgungsspannung eingerichtet ist, eine unidirektionale oder bidirektionale Kommunikation ermöglicht.

Nach Ausführungsbeispielen der Erfindung ist vorgesehen, dass eine Empfangseinheit zum Empfangen von digitalen Lichtsteuersignalen gemäß einem vorgegebenen Protokoll, vorzugsweise gemäß dem DALI Standard, vorhanden ist. Weiterhin ist ein Modulator zum Aufmodulieren der Steuersignale auf die DC-Versorgungsspannung vorhanden. Der Modulator führt das Aufmodulieren der Steuersignale auf die DC-Versorgungsspannung abhängig vom aktuellen Pegel der von der Empfangseinheit empfangenen digitalen Lichtsteuersignale durch. Eine Betriebsschaltung ist eingerichtet, um die DC-Versorgungsspannung zu empfangen und einen LED-Strom für die wenigstens eine Leuchtdiode bereitzustellen.

Die Erfindung betrifft ein Beleuchtungssystem nach Anspruch 1 und ein Verfahren zum Betreiben wenigstens einer Leuchtdiode nach Anspruch 11.

Der Modulator kann ein Steuersignal mit hohem Pegel aufmoduliert, wenn das von der Empfangseinheit empfangene digitale Lichtsteuersignal einen hohen Pegel aufweist. Der Modulator kann ein Steuersignal mit niedrigem Pegel aufmodulieren, wenn das von der Empfangseinheit empfangene digitale Lichtsteuersignal einen niedrigen Pegel aufweist.

Ein Beleuchtungssystem nach einem Ausführungsbeispiel umfasst eine Quelle für die DC-Versorgungsspannung und die Betriebsschaltung nach einem Ausführungsbeispiel. Die Quelle für die DC-Versorgungsspannung kann beispielsweise eine Zentraleinheit sein, die eingangsseitig mit einer Wechselspannungsquelle verbunden ist und die einen Wechselrichter, eine Leistungsfaktorkorrekturschaltung und einen DC/DC-Wandler umfassen kann. Die Quelle für die DC-Versorgungsspannung kann auch eine Batterie sein, die fern von der Betriebsschaltung vorgesehen sein kann oder die lokal an der Betriebsschaltung vorgesehen sein kann. Die Empfangseinheit kann in die Quelle integriert sein.

Die Betriebsschaltung ist über einen DC-Bus mit der Quelle für die DC-Versorgungsspannung verbunden.

Mehrere Betriebsschaltungen nach Ausführungsbeispielen können mit dem DC-Bus verbunden sein.

Ein PLC-Modulator zum Erzeugen der aufmodulierten Steuersignale kann in die Zentraleinheit integriert sein oder kann separat von der Zentraleinheit vorgesehen sein. Die Zentraleinheit kann beispielsweise einen DC-Ausgangskreis mit dem PLC-Modulator umfassen. Eine derartige Kommunikation wird in der Technik auch als PLC ("Power Line Communication") bezeichnet.

Durch die Ausgestaltung der Betriebsschaltung für eine PLC über einen DC-Bus kann auf zusätzliche Signalleitungen verzichtet werden. Dies reduziert den Aufwand bei der Installation der Betriebsschaltung.

Nach Ausführungsbeispielen der Erfindung ist vorgesehen, dass eine integrierte Halbleiterschaltung einer Betriebsschaltung sowohl eingerichtet ist, um Steuer- oder Regelfunktionen auszuführen, als auch eingerichtet ist, um die weitergeleiten Steuersignale, die auf die DC-Versorgungsspannung aufmoduliert sind und von einem Demodulator demoduliert werden, auszulesen und/oder um Signale an den Demodulator zu senden.

Der Demodulator kann dazu ausgelegt sein, von der integrierte Halbleiterschaltung empfangene Signale auf die DC-Versorgungsspannung aufzumodulieren.

Eine derartige Betriebsschaltung, die bei Ausführungsbeispielen verwendet wird, umfasst somit einen Demodulator für eine Kommunikation über die Versorgungsleitungen, die als DC-Bus ausgestaltet sind, und eine integrierte Halbleiterschaltung, um Steuer- oder Regelfunktionen auszuführen.

Der Demodulator übernimmt die Demodulation und/oder Modulation von PLC-Signalen und wirkt somit als PLC-Demodulator oder als PLC-Modulator.

Nach weiteren Ausführungsbeispielen der Erfindung ist vorgesehen, dass eine integrierte Halbleiterschaltung einer Betriebsschaltung sowohl eingerichtet ist, um Steuer- oder Regelfunktionen auszuführen, als auch eingerichtet ist, um Steuersignale, die auf die DC-Versorgungsspannung aufmoduliert sind, auszulesen und/oder um Signale auf die DC-Versorgungsspannung aufzumodulieren. Eine derartige integrierte Halbleiterschaltung kann somit einen darin integrierten Demodulator für eine Kommunikation über die Versorgungsleitungen, die als DC-Bus ausgestaltet sind, aufweisen.

Wenn der Demodulator in die integrierte Halbleiterschaltung integriert ist, ist insbesondere nicht erforderlich, zwei separate Halbleiterchips zu verwenden, von denen der eine die PLC-Demodulation und der andere die Steuerung oder Regelung der Betriebsschaltung ausführt. Dies verringert nicht nur den Platzbedarf für die Betriebsschaltung, sondern auch die Kosten.

Eine Betriebsschaltung für wenigstens eine Leuchtdiode nach einem Ausführungsbeispiel ist eingerichtet, um eine DC-Versorgungsspannung zu empfangen und einen LED-Strom für die wenigstens eine Leuchtdiode bereitzustellen. Die Betriebsschaltung umfasst eine integrierte Halbleiterschaltung zum Steuern der Betriebsschaltung. Die integrierte Halbleiterschaltung ist eingerichtet, um von dem Demodulator von der DC-Versorgungsspannung demodulierte Steuersignale auszulesen.

Die Betriebsschaltung kann eine Wandlerschaltung mit wenigstens einem steuerbaren Schalter umfassen. Die Wandlerschaltung kann einen Abwärtswandler (der in der Technik auch als Buck-Konverter bezeichnet wird), einen Aufwärtswandler (der in der Technik auch als Boost-Konverter bezeichnet wird), einen Inverswandler (der in der Technik auch als Buck-Boost-Konverter bezeichnet wird) oder einen Sperrwandler (der in der Technik auch als Flyback-Konverter bezeichnet wird) umfassen. Die Betriebsschaltung kann einen linearen Stromregler umfassen.

Die integrierte Halbleiterschaltung kann eingerichtet sein, um den steuerbaren Schalter abhängig von den ausgelesenen Steuersignalen zu steuern. Die integrierte Halbleiterschaltung kann eingerichtet sein, um Schaltzeitpunkte für den steuerbaren Schalter zu bestimmen, zu denen der steuerbare Schalter eingeschaltet oder ausgeschaltet wird.

Die integrierte Halbleiterschaltung kann eingerichtet sein, um den steuerbaren Schalter abhängig von den vom Demodulator ausgelesenen Steuersignalen zu schalten. Eine Schaltfrequenz des steuerbaren Schalters kann von der integrierten Halbleiterschaltung abhängig von den vom Demodulator ausgelesenen Steuersignalen eingestellt werden. Alternativ oder zusätzlich können Einschaltzeitpunkte zum Einschalten des steuerbaren Schalters und/oder Ausschaltzeitpunkte zum Ausschalten des steuerbaren Schalters abhängig von den ausgelesenen Steuersignalen eingestellt werden. Die ausgelesenen Steuersignale können wenigstens einen Parameter der von der integrierten Halbleiterschaltung gesteuerten Wandlerschaltung festlegen. Beispielsweise können die ausgelesenen Steuersignale einen Dimmlevel und somit eine Änderung des LED-Stroms definieren. Die Steuersignale können auch weitere Parameter festlegen, beispielsweise die Dauer und/oder den Zeitabstand von Pulspaketen bei Pulsweitendimmen.

Wenigstens ein weitere Parameter des Betriebs der Wandlerschaltung kann durch mit der integrierten Halbleiterschaltung gekoppelte Schaltungselemente benutzerdefiniert festlegbar sein.

Beispielsweise kann die Betriebsschaltung einen benutzerdefiniert setzbaren Widerstand, eine benutzerdefiniert setzbar Kapazität oder ein anderes Element aufweisen, das von der integrierten Halbleiterschaltung ausgelesen werden kann. Beispielsweise können unterschiedliche Widerstandswerte oder Kapazitätswerte eingestellt werden, um unterschiedliche LED-Ströme oder Ausgangsspannungen der Betriebsschaltung festzulegen.

Die Wandlerschaltung kann ein Stromregler sein. Die integrierte Halbleiterschaltung kann eingerichtet sein, um die Wandlerschaltung so zu steuern, dass ein zeitlicher Mittelwert des LED-Stroms auf einen Sollwert geregelt wird.

Die integrierte Halbleiterschaltung kann einen Anschluss aufweisen, der mit einem steuerbaren Schalter der Wandlerschaltung verbunden ist.

Die integrierte Halbleiterschaltung kann einen steuerbaren Schalter der Wandlerschaltung umfassen. Die integrierte Halbleiterschaltung kann auch eine Treiberschaltung für den steuerbaren Schalter der Wandlerschaltung umfassen.

Die integrierte Halbleiterschaltung kann eingerichtet sein, um einen Betriebszustand der Betriebsschaltung und/oder der wenigstens einen Leuchtdiode zu überwachen. Die integrierte Halbleiterschaltung kann eingerichtet sein, um abhängig von einer Diagnose des Betriebszustands ein Signal an den Demodulator zu senden und der Demodulator kann dazu ausgelegt sein, das Signal auf die DC-Versorgungsspannung aufzumodulieren, um es über den DC-Bus zu übertragen. Beispiele für derartige Betriebszustände sind ein Fehlerzustand der Betriebsschaltung.

Alternativ oder zusätzlich kann der Demodulator eingerichtet sein, um ein Ausgangssignal eines Sensors zu überwachen. Die der Demodulator kann eingerichtet sein, um abhängig von dem Ausgangssignal des Sensors das Signal auf die DC-Versorgungsspannung aufzumodulieren, um Informationen über einen mit dem Sensor erfassten Messwert über den DC-Bus zu übertragen. Beispiele für derartige Sensoren beinhalten Temperatursensoren, die eine Temperatur an einem Betriebsgerät oder einem LED-Modul erfassen, oder Helligkeitssensoren.

Die Betriebsschaltung und ein LED-Modul können in ein gemeinsames Gehäuse integriert sein

Die Betriebsschaltung kann in ein Betriebsgerät integriert sein, das Ausgänge zur Verbindung mit einem LED-Modul umfasst.

Ein Betriebsgerät nach einem Ausführungsbeispiel umfasst die Betriebsschaltung nach einem Ausführungsbeispiel zum Bereitstellen eines LED-Stroms für wenigstens eine Leuchtdiode.

Ein Verfahren zum Betreiben wenigstens einer Leuchtdiode nach einem Ausführungsbeispiel verwendet eine Betriebsschaltung, die eine DC- Versorgungsspannung empfängt und einen LED-Strom für die wenigstens eine Leuchtdiode bereitstellt. Es können digitale Lichtsteuersignale gemäß einem vorgegebenen Protokoll, vorzugsweise gemäß dem DALI Standard, empfangen werden und die Steuersignale auf die DC-Versorgungsspannung mittels eines Modulators abhängig vom aktuellen Pegel der empfangenen digitalen Lichtsteuersignale aufmoduliert werden.

Die Betriebsschaltung umfasst einen Demodulator und eine integrierte Halbleiterschaltung. Der Demodulator liest auf die DC-Versorgungsspannung aufmodulierte Steuersignale aus und leitet diese an die integrierte Halbleiterschaltung weiter. Die integrierte Halbleiterschaltung steuert die Betriebsschaltung abhängig von den ausgelesenen Steuersignalen. Der Demodulator moduliert ein Signal auf die DC-Versorgungsspannung auf, abhängig von einer Diagnose eines Betriebszustands und/oder abhängig von einem Ausgangssignal eines Sensors.

Das Steuern der Betriebsschaltung kann ein Steuern eines steuerbaren Schalters der Betriebsschaltung zum Bereitstellen des LED-Stroms umfassen.
Die bei dem Verfahren verwendete Betriebsschaltung kann die Betriebsschaltung nach einem Ausführungsbeispiel sein.

Bei den Vorrichtungen, Systemen und Verfahren nach Ausführungsbeispielen umfassen können die Steuersignale, die von der integrierten Halbleiterschaltung demoduliert und ausgelesen werden, in binären Folgen kodierte Steuerbefehle umfassen. Die Steuerbefehle können Befehle zum Starten, zum Dimmen, zum Einleiten eines Notlichtbetriebs, zum Beenden eines Notlichtbetriebs und/oder zum Ausschalten der Betriebsschaltung umfassen. Die Steuerbefehle können eine binäre Folge umfassen, die in dem Steuersignal kodiert ist.

Das der DC-Versorgungsspannung aufmodulierte Steuersignal kann ein Wechselspannungs (AC)-Signal sein, das der DC-Versorgungsspannung aufmoduliert ist. Das AC-Signal kann eine Amplitude aufweisen, die klein im Vergleich zur DC-Versorgungsspannung ist. Die Information kann durch Aufmodulieren der empfangenen Steuersignale auf die DC-Versorgungsspannung abhängig vom aktuellen Pegel der von der Empfangseinheit empfangenen digitalen Lichtsteuersignale aufmoduliert werden. Der Modulator kann ein Steuersignal mit hohem Pegel aufmodulieren, wenn das von der Empfangseinheit empfangene digitale Lichtsteuersignal einen hohen Pegel aufweist. Der Modulator kann ein Steuersignal mit niedrigem Pegel aufmodulieren, wenn das von der Empfangseinheit empfangene digitale Lichtsteuersignal einen niedrigen Pegel aufweist. Alternativ kann auch eine Invertierung erfolgen, so dass der Modulator ein Steuersignal mit hohem Pegel aufmodulieren kann, wenn das von der Empfangseinheit empfangene digitale Lichtsteuersignal einen niedrigen Pegel aufweist.
Beispielsweise kann das Steuersignal als Einhüllende des AC-Signals übertragen werden. Beispielsweise kann das Steuersignal als hochfrequentes Signal in der Übertragungsrate der Einhüllenden der Bitlänge des von der Empfangseinheit empfangenen digitalen Lichtsteuersignales entsprechen.

Bei den Vorrichtungen, Systemen und Verfahren nach Ausführungsbeispielen kann das Steuersignal an die Betriebsschaltung oder an eine Gruppe von Betriebsschaltungen adressiert sein. Dadurch kann eine gezielte Ansteuerung über den DC-Bus erreicht werden, wenn mehrere Betriebsschaltungen mit dem DC-Bus verbunden sind.

Falls der Demodulator eingerichtet ist, um zum Übertragen von Information von der Betriebsschaltung ein Signal auf die DC-Versorgungsspannung aufzumodulieren, kann Information ebenfalls durch eine Modulation mit der Charakteristik gemäß dem vorgegebenen Protokoll des Steuersignals kodiert sein.

Bei den Vorrichtungen, Systemen und Verfahren nach Ausführungsbeispielen können externe Schaltungskomponenten mit der integrierten Halbleiterschaltung verbunden sein, um Betriebsparameter einzustellen. Beispielsweise können durch setzbare Widerstandswerte oder andere Elemente unterschiedliche Betriebsparameter, z.B. unterschiedliche LED-Ströme oder unterschiedliche Ausgangsspannungen, eingestellt werden.

Bei Vorrichtungen, Systemen und Verfahren nach Ausführungsbeispielen kann mit einer Betriebsschaltung für wenigstens eine Leuchtdiode, die für eine Verbindung mit einem DC-Bus eingerichtet ist, eine unidirektionale oder bidirektionale PLC verwirklicht werden. Die integrierte Halbleiterschaltung kann dabei zusätzlich zu der Steuerung eines Stromreglers auch eine Demodulation von in PLC übertragenen Steuersignalen ausführen.

Bei Vorrichtungen, Systemen und Verfahren nach Ausführungsbeispielen kann die integrierte Halbleiterschaltung ein Mikrocontroller oder ein Controller sein. Die integrierte Halbleiterschaltung kann auch ein anwendungsspezifische Spezialschaltung (ASIC), ein Mikroprozessor oder ein Prozessor sein.

Die Erfindung wird nachfolgend unter Bezugnahme auf die Figuren anhand bevorzugter Ausführungsformen erläutert. In den Figuren bezeichnen identische Bezugszeichen identische Elemente.
Figur 1 zeigt ein System mit einer Betriebsschaltung nach einem Ausführungsbeispiel.
Figur 2 zeigt eine Betriebsschaltung nach einem Ausführungsbeispiel.
Figur 3 zeigt eine Betriebsschaltung nach einem weiteren Ausführungsbeispiel.
Figur 4 veranschaulicht eine Übertragung von Steuersignalen über einen DC-Bus.
Figur 5 zeigt ein System mit einer Betriebsschaltung nach einem Ausführungsbeispiel.
Figur 6 zeigt eine Betriebsschaltung nach einem weiteren Ausführungsbeispiel.
Figur 7 zeigt eine Betriebsschaltung nach einem weiteren Ausführungsbeispiel.
Figur 8 veranschaulicht eine Übertragung von Steuersignalen über einen DC-Bus.

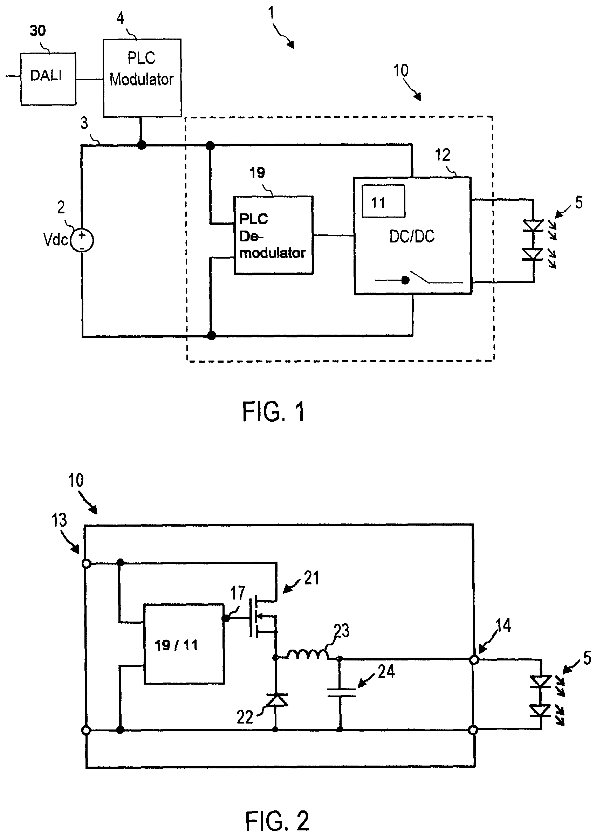

Figur 1 zeigt eine Darstellung eines Systems 1, das eine Betriebsschaltung 10 für wenigstens eine Leuchtdiode (LED) 5 umfasst. Das System umfasst eine Quelle 2, die eingerichtet ist, um eine DC-Versorgungsspannung Vdc bereitzustellen. Ein DC-Bus 3 verbindet die Quelle 2 für die DC-Versorgungsspannung mit einem Eingang der Betriebsschaltung 10. Um Steuersignale in einer PLC zu der Betriebsschaltung 10 zu übertragen, ist ein PLC-Modulator 4 mit dem DC-Bus gekoppelt. Auch wenn der PLC-Modulator 4 in Figur 1 als separate Komponente dargestellt ist, kann der PLC-Modulator 4 beispielsweise in die Quelle 2 für die DC-Versorgungsspannung integriert sein. Der PLC-Modulator 4 kann in einem DC-Ausgangskreis der Quelle 2 vorgesehen sein. Die Quelle 2 für die DC-Versorgungsspannung kann fern von der Betriebsschaltung 10 vorgesehen sein. Die Quelle 2 für die DC-Versorgungsspannung kann aber auch lokal bei der Betriebsschaltung 10 vorgesehen sein, beispielsweise wenn eine Batterie die DC-Versorgungsspannung bereitstellt, wie dies in einem Notlichtbetrieb der Fall sein kann.

Der PLC-Modulator 4 ist mit einer Empfangseinheit 30 verbunden. In diesem Beispiel ist die Empfangseinheit 30 als DALI Schnittstelle 30 ausgeführt. Die DALI Schnittstelle 30 ist hier beispielhaft als Schnittstelle zum Empfangen von digitalen Lichtsteuersignalen gemäß einem vorgegebenen Protokoll dargestellt. Die Schnittstelle 30 kann alternativ beispielsweise zum Empfang von digitalen Lichtsteuersignalen gemäß einem anderen Protokoll zur drahtgebunden oder drahtlosen Übertragung ausgelegt sein, beispielsweise für einen Empfang gemäß dem DMX- Protokoll, dem Bluetooth Protokoll, dem Zigbee Protokoll oder gemäß dem IPv6 Protokoll. Der PLC-Modulator 4 kann einen Microcontroller aufweisen.

Die Empfangseinheit 30 dient zum Empfangen von digitalen Lichtsteuersignalen gemäß einem vorgegebenen Protokoll. In diesem Beispiel ist die Empfangseinheit 30 für Lichtsteuersignale gemäß dem DALI Standard ausgeführt. Der PLC-Modulator 4 erkennt die von der Empfangseinheit 30 empfangenen Lichtsteuersignale und moduliert abhängig von diesen die Steuersignale auf den DC-Bus 3 auf. Der PLC-Modulator 4 führt das Aufmodulieren der Steuersignale auf den DC-Bus 3 abhängig vom aktuellen Pegel der von der Empfangseinheit 30 empfangenen digitalen Lichtsteuersignale durch. Vorzugsweise erfolgt dabei eine direkte Umsetzung des Aufmodulierens durch den PLC-Modulator 4 des aktuellen Pegels der von der Empfangseinheit 30 empfangenen digitalen Lichtsteuersignale wobei keine oder nur eine sehr geringe Zeitverzögerung in der Umsetzung der Signale auftritt. Etwaige Zeitverzögerungen können beispielsweise aufgrund von Signallaufzeiten in der Signalverarbeitung und Weiterleitung auftreten. Grundsätzlich ist jedoch die Signaldauer der von der Empfangseinheit 30 empfangenen digitalen Lichtsteuersignale und der auf dem DC-Bus 3 aufmodulierten Steuersignale gleich oder zumindest nahezu gleich. Beispielsweise entspricht die Zeitdauer eines von der Empfangseinheit 30 empfangenen HIGH-Bits (z.B. Übertragung einer '1') der Zeitdauer eines auf dem DC-Bus 3 übertragenen aufmodulierten Signales für ein HIGH-Bit (Übertragung einer ,1'). Beispielsweise kann die Übertragungsrate der vom PLC-Modulator 4 auf den DC-Bus 3 aufmodulierten Steuersignale gleich der Übertragungsrate der von der Empfangseinheit 30 empfangenen digitalen Lichtsteuersignale sein.

Beispielsweise kann der PLC-Modulator 4 ein hochfrequentes Signal auf den DC-Bus 3 aufmodulieren, welches in der Bitlänge der Einhüllenden des hochfrequenten Signales der Bitlänge des von der Empfangseinheit 30 empfangenen digitalen Lichtsteuersignales entspricht. Das hochfrequente Signal kann beispielsweise eine Frequenz im Bereich von 100 kHz bis 250 kHz aufweisen. Es werden dabei keine Daten innerhalb einer Periode des hochfrequenten Signales übertragen sondern die Einhüllende des hochfrequenten Signales gibt das durch den PLC-Modulator 4 auf den DC-Bus 3 aufmodulierte Steuersignal wieder. Im Falle eines Active Low Lichtsteuersignales wie bspw. bei DALI kann ein auf den DC-Bus 3 ein Steuersignal aufmoduliert werden, wenn ein Bit mit LOW-Pegel, also niedrigem Pegel durch die Empfangseinheit 30 empfangen wurde. Für die Zeitdauer des LOW-Bits wird somit ein hochfrequentes Signal als Steuersignal auf den DC-Bus 3 aufmoduliert.

In Figur 1 ist nur eine Betriebsschaltung 10 mit zugeordneten LEDs 5 dargestellt. Es können aber auch mehrere Betriebsschaltungen 10, wie sie nachfolgend detailliert beschrieben werden, mit dem DC-Bus 3 verbunden sein.

Die Betriebsschaltung 10 ist so eingerichtet, dass sie einen LED-Strom für die LEDs 5 erzeugt. Die Betriebsschaltung 10 kann einen Stromregler umfassen. Der Stromregler kann einen DC/DC-Wandler 12 umfassen, der von einer integrierten Halbleiterschaltung 11 gesteuert wird.

Der DC/DC-Wandler 12 kann beispielsweise ein Abwärtswandler, ein Aufwärtswandler, ein Inverswandler oder ein Sperrwandler sein. Es kann alternativ oder zusätzlich auch ein linearer Stromregler verwendet werden.

Die integrierte Halbleiterschaltung 11 kann eingerichtet sein, um einen Arbeitspunkt des Stromreglers festzulegen. Die integrierte Halbleiterschaltung 11 kann eingerichtet sein, um den Stromregler so zu steuern, dass ein gewünschter LED-Strom an die LEDs 5 bereitgestellt wird. Die Ausgestaltung der integrierten Halbleiterschaltung 11 kann abhängig von der Ausgestaltung des DC/DC-Wandlers 12 unterschiedlich sein. Für einen DC/DC-Wandler, der einen steuerbaren Schalter umfasst, wie dies in Figur 1 schematisch dargestellt ist, kann die integrierte Halbleiterschaltung 11 eingerichtet sein, um den steuerbaren Schalter zu steuern.

Die integrierte Halbleiterschaltung 11 kann beispielsweise Einschaltzeitpunkte, zu denen der steuerbare Schalter eingeschaltet wird, und/oder Ausschaltzeitpunkte, zu denen der steuerbare Schalter ausgeschaltet wird, bestimmen und das steuerbare Schaltmittel entsprechend ansteuern.

Die integrierte Halbleiterschaltung 11 ist mit einem PLC-Demodulator 19 verbunden. Der PLC-Demodulator 19 ist ausgelegt, um ein auf die DC-Versorgungsspannung an dem DC-Bus 3 aufmoduliertes Steuersignal auszulesen. Der PLC-Demodulator 19 kann eingerichtet sein, um die Funktion eines PLC-Modulators zu erfüllen. Der PLC-Demodulator 19 kann von über den DC-Bus 3 empfangenen Steuersignal auslesen und an die integrierte Halbleiterschaltung 11 weiterleiten. Die Steuerung des steuerbaren Schalters des DC/DC-Wandlers 12 kann abhängig von einem über den DC-Bus 3 empfangenen Steuersignal ausgeführt werden.

Verschiedene Steuersignale können über den DC-Bus übertragen werden. Der PLC-Demodulator 19, kann ein Steuersignal an dem DC-Bus 3 auslesen und an die integrierte Halbleiterschaltung 11, die den Stromregler steuert und dazu beispielsweise den steuerbaren Schalter des DC/DC-Wandlers schaltet, weiterleiten, mit dem ein Steuerbefehl zum Starten der Betriebsschaltung übertragen wird. Als Antwort darauf kann die integrierte Halbleiterschaltung 11 den DC/DC-Wandler 12 so steuern, dass ein LED-Strom zur Versorgung der LEDs 5 erzeugt wird. Der PLC-Demodulator 19 kann alternativ oder zusätzlich ein Steuersignal an dem DC-Bus 3 auslesen und an die integrierte Halbleiterschaltung 11 weiterleiten, mit dem ein Steuerbefehl zum Abschalten der Betriebsschaltung übertragen wird. Als Antwort darauf kann die integrierte Halbleiterschaltung 11 den DC/DC-Wandler 12 so steuern, dass kein LED-Strom zur Versorgung der LEDs 5 mehr erzeugt wird. Der PLC-Demodulator 19 kann alternativ oder zusätzlich ein Steuersignal an dem DC-Bus 3 auslesen, mit dem ein Steuerbefehl zum Dimmen übertragen wird, der einen Dimmlevel umfassen kann. Als Antwort darauf kann die integrierte Halbleiterschaltung 11 den DC/DC-Wandler 12 so steuern, dass der zum Dimmen der LED-Strom abgesenkt oder erhöht wird.

Der PLC-Demodulator 19 kann alternativ oder zusätzlich ein Steuersignal an dem DC-Bus 3 auslesen, mit dem ein Steuerbefehl für eine Notlichtbeleuchtung übertragen wird. Als Antwort darauf kann die integrierte Halbleiterschaltung 11 den DC/DC-Wandler 12 so steuern, dass für eine Notlichtbeleuchtung ein zeitlicher Mittelwert des LED-Stroms verringert wird. Die entsprechenden Steuerbefehle können von dem PLC-Modulator 4 erzeugt werden.

Die Steuersignale können in einer Folge von Binärwerten kodiert sein, wobei die Charakteristik der übertragengen Steuersignale, insbesondere die Bitfolge und die Datenrate, dem DALI-Protokoll entsprechen. Verschiedene Modulationstechniken können in dem System 1 eingesetzt werden. Vorzugsweise werden AC-Signale mit einer vorgegebenen Amplitude und vorgegebener Frequenz von dem PLC-Modulator 4 erzeugt und von dem PLC-Demodulator 19 ausgelesen werden. Die Frequenz der AC-Signale kann einen festen Wert aufweisen. Die AC-Signale können hochfrequente AC-Signale sein. Die Amplitude der AC-Signale kann klein im Vergleich zu der DC-Versorgungsspannung sein. Beispielsweise kann die Amplitude der aufmodulierten Steuersignale kleiner als 10 % oder kleiner als 5 % der DC-Versorgungsspannung. Die AC-Signale können Rechtecksignale, sinusförmige Signale oder dreiecksförmige Signale sein oder andere Signalformen aufweisen. Die Steuersignale sind vorzugweise derart kodiert, dass als Powerline-Signal (PLC-Signal) ein Lichtsteuersignal gemäß dem DALI-Standard, insbesondere aufweisend eine Übertragungsrate gemäß dem DALI-Standard. wie es von der Empfangseinheit 30 empfangen wurde, auf den DC-Bus 3 aufmoduliert wird. Vorzugsweise wird dabei das Steuersignal als Einhüllende des AC-Signals übertragen. Beispielsweise kann das PLC-Signal als hochfrequentes Signal in der Übertragungsrate der Einhüllenden der Bitlänge des von der Empfangseinheit 30 empfangenen digitalen Lichtsteuersignales entsprechen.

Der PLC-Demodulator 19 kann ein Mikrocontroller oder Controller sein. Andere Ausgestaltungen sind möglich. Beispielsweise kann der PLC-Demodulator 19 ein Mikroprozessor, ein Prozessor oder eine anwendungsspezifische Spezialschaltung sein.

Die integrierte Halbleiterschaltung 11 kann ein Mikrocontroller oder Controller sein. Andere Ausgestaltungen sind möglich. Beispielsweise kann die integrierte Halbleiterschaltung 11 ein Mikroprozessor, ein Prozessor oder eine anwendungsspezifische Spezialschaltung sein.

Der PLC-Modulator 4 ist beispielsweise auch dazu ausgelegt, die von dem PLC-Demodulator 19 ausgesendeten Signale zu empfangen und als eine Art Rückkanal an die Empfangseinheit 30 auszugeben, womit die Empfangseinheit 30 diese Signale als Rücksignale als digitale Lichtsteuersignale gemäß einem vorgegebenen Protokoll aussenden kann.

Figur 2 zeigt eine Betriebsschaltung 10 nach einem Ausführungsbeispiel. Gemäß diesem Ausführungsbeispiel sind der PLC-Demodulator 19 und die integrierte Halbleiterschaltung 11 in einen Block integriert, beispielsweise aufweisend einen gemeinsamen Microcontroller.

Ein Eingang 13 ist für eine Verbindung mit dem DC-Bus 3 eingerichtet. Der DC/DC-Wandler kann beispielsweise als Abwärtswandler ausgebildet sein und umfasst einen steuerbaren Schalter 21, eine Diode 22, eine Induktivität 23 und einen Kondensator 24. Der Kondensator 24 ist als Ausgangskapazität parallel zu Ausgängen 14 der Betriebsschaltung 10 vorgesehen. In einem Ein-Zustand des steuerbaren Schalters 21 wird Energie in der Induktivität 23 gespeichert, die sich in einem Aus-Zustand des steuerbaren Schalters 21 über die Diode 22 entlädt. Auch wenn beispielhaft ein Abwärtswandler dargestellt ist, können auch andere Wandlertopologien eingesetzt werden, wie Aufwärtswandler, Sperrwandler oder Inverswandler.

Der steuerbare Schalter 21 kann als Leistungsschalter ausgestaltet sein. Der Steuerbare Schalter kann ein Transistor mit isolierter Gate-Elektrode sein, beispielsweise ein MOSFET sein. Die integrierte Halbleiterschaltung 11/19 legt im Betrieb einen Arbeitspunkt des Stromreglers fest. Die integrierte Halbleiterschaltung 11/19 kann den steuerbaren Schalter 21 so steuern, dass durch das Ein- und Ausschalten ein LED-Strom auf einen Sollwert geregelt werden kann.

Wie in Figur 2 dargestellt, weist die integrierte Halbleiterschaltung 11/19 einen Ausgang 15 auf, der mit dem steuerbaren Schalter 21 verbunden ist. Der Ausgang 15 kann mit einem Gateanschluss des steuerbaren Schalters 21 verbunden sein.
Eine Treiberschaltung für den steuerbaren Schalter 21 kann in die integrierte Halbleiterschaltung 11/19 integriert sein. Die Ansteuerung des steuerbaren Schalters 21 erfolgt abhängig von Steuersignalen, die auf die DC-Versorgungsspannung aufmoduliert sind und von der integrierten Halbleiterschaltung 11/19 ausgelesen werden.

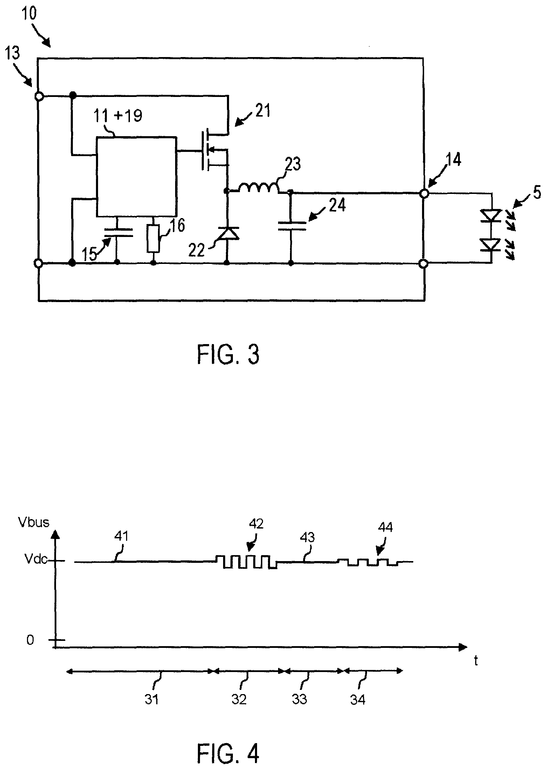

Zusätzlich zu einer Ansteuerung durch PLC über den DC-Bus kann die Betriebsschaltung 10 auch so eingerichtet sein, dass Betriebsparameter durch benutzerdefiniert setzbare Schaltungselemente der Betriebsschaltung einstellbar sind, wie dies in Figur 3 dargestellt ist.

Figur 3 zeigt eine Betriebsschaltung 10 nach einem Ausführungsbeispiel, bei dem ebenfalls der PLC-Demodulator 19 in die integrierte Halbleiterschaltung 11 integriert ist. Bei diesem Ausführungsbeispiel ist die integrierte Halbleiterschaltung 11 mit wenigstens einem Schaltungselement 15, 16 gekoppelt, mit dem Betriebsparameter der Betriebsschaltung 10 einstellbar sind. Beispielsweise kann über einen Widerstand 16 oder einen Kondensator 15 ein maximaler LED-Strom, eine Vorwärtsspannung der LEDs 5 oder ein andere Betriebsparameter eingestellt werden.

Der Widerstand 16 und/oder der Kondensator 15 können so ausgestaltet sein, dass er manuell auf unterschiedliche Werte eingestellt werden kann. Dies erlaubt eine benutzerdefinierte Konfiguration der Betriebsschaltung 10 zur Verwendung mit dem daran angeschlossenen LED-Modul. Die integrierte Halbleitschaltung 11 kann eingerichtet sein, um abhängig von dem wenigstens einen Schaltungselement 15, 16 den benutzerdefiniert eingestellten Betriebsparameter auszulesen und den DC/DC-Wandler abhängig davon zu steuern. Steuerbefehle können über den DC-Bus empfangen und von der integrierten Halbleiterschaltung 11 ausgewertet werden, um beispielsweise die Betriebsschaltung 10 einzuschalten, auszuschalten, einen Dimmvorgang einzuleiten oder einen Notlichtbetrieb einzuleiten.

Figur 4 zeigt beispielhaft die Übertragung von Steuersignalen über den DC-Bus. Wenn in einem Intervall 31 keine Daten übertragen werden, weist eine Busspannung am DC-Bus einen Wert 41 auf, der der DC-Versorgungsspannung Vdc entspricht.

Bei Empfang von digitalen Lichtsteuersignalen durch die Empfangseinheit 30 gemäß einem vorgegebenen Protokoll erkennt der PLC-Modulator 4 die von der Empfangseinheit 30 empfangenen Lichtsteuersignale und moduliert abhängig von diesen die Steuersignale auf den DC-Bus 3 auf. Zur Übertragung eines Steuerbefehls kann ein AC-Signal 42, 44 auf die Busspannung aufmoduliert werden. Der entsprechende PLC-Modulator 4 zum Aufmodulieren des Steuersignals kann beispielsweise in einer Zentraleinheit des Systems 1 vorgesehen sein oder kann in einem anderen Betriebsgerät für ein Leuchtmittel angeordnet sein. Steuersignale oder andere Informationen können in der Amplitude der AC-Signale kodiert werden. Die aufmodulierten AC-Signale 42, 44 zeigen beispielhaft eine Modulation, bei der das erste aufmodulierte AC-Signal 42 einen ersten Binärwert kodiert. Ein zweites aufmoduliertes AC-Signal 44, welches sich in der Bitfolge von dem ersten aufmodulierten AC-Signal 42 verschieden ist, kann einen zweiten Binärwert kodieren. Die hochfrequente Modulation der AC-Signale 42, 44 kann in Form von Rechtecksignalen erfolgen, können auch andere Signalformen verwendet werden, beispielsweise sinusförmige oder dreiecksförmige Signale. In einem Intervall 33 zwischen den Intervallen 32, 34, in denen die AC-Signale 42, 44 aufmoduliert sind, weist die Busspannung wieder einen Wert 43 auf, der gleich der DC-Versorgungsspannung ist.

Der PLC-Modulator 4 kann das Aufmodulieren der Steuersignale 42, 44 auf die DC-Versorgungsspannung 41 abhängig vom aktuellen Pegel der von der Empfangseinheit 30 empfangenen digitalen Lichtsteuersignale durchführen. Der Modulator 4 kann ein Steuersignal 42, 44 einer Bitfolge von hohen und niedrigen Pegeln aufmodulieren, entsprechend der Bitfolge des von der Empfangseinheit 30 empfangenen digitalen Lichtsteuersignals. Die vom PLC-Modulator 4 auf den DC-Bus 3 aufmodulierten Steuersignale können die gleiche Übertragungsrate wie die von der Empfangseinheit 30 empfangenen digitalen Lichtsteuersignale aufweisen.

Über die aufmodulierten und von dem PLC-Demodulator 19 empfangenen AC-Signale 42, 44 kann bei der Betriebsschaltung 10 nach einem Ausführungsbeispiel die integrierte Halbleiterschaltung 11 gesteuert werden. Optional ist es nicht erforderlich, einen separaten Demodulator 19 zwischen dem DC-Bus 3 und der integrierten Halbleiterschaltung 11 zu verwenden, sondern es kann der Demodulator 19 in die integrierte Halbleiterschaltung 11 integriert werden.

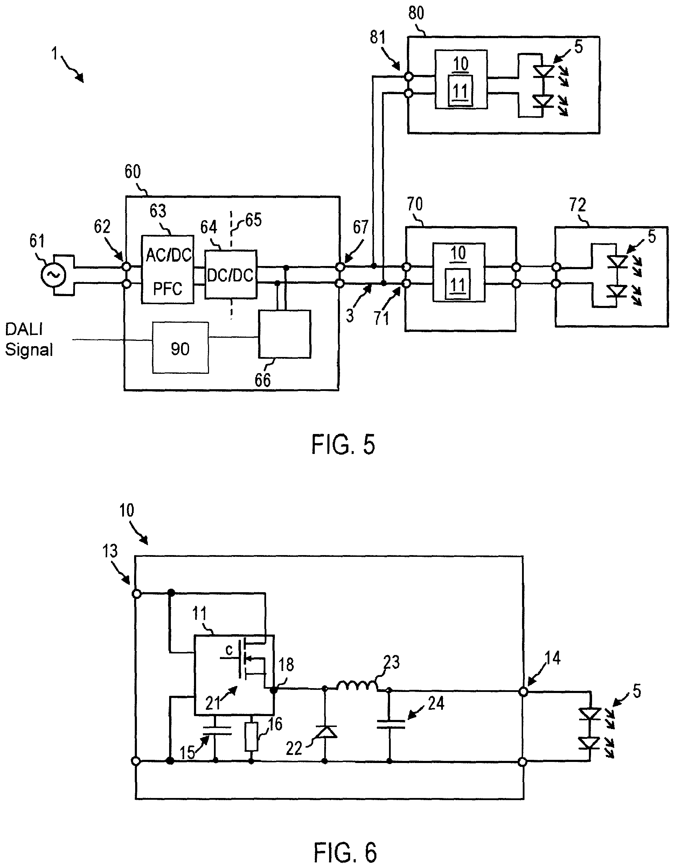

Figur 5 zeigt ein System 1 nach einem Ausführungsbeispiel, bei dem mehrere Betriebsschaltungen 10 mit dem DC-Bus 3 verbunden sind.

Das System 1 weist eine Quelle für die DC-Versorgungsspannung auf, die eine Zentraleinheit 60 umfasst. Die Zentraleinheit 60 ist eingerichtet, um eine DC-Versorgungsspannung zu erzeugen und um die Betriebsschaltungen 10 über einen DC-Bus 3 mit Energie zu versorgen. Elemente wie ein Gleichrichter und eine Leistungsfaktorkorrekturschaltung 62, die herkömmlich separat in jedem von mehreren LED-Konvertern vorgesehen sein müssten, können in der Zentraleinheit 60 vorhanden sein und müssen dann nicht mehr separat in den verschiedenen Leuchtmittelbetriebsgeräten verwendet werden. Die Zentraleinheit 60 kann einen DC/DC-Wandler 64 mit Potenzialtrennung umfassen, mit dem eine galvanische Trennung durch eine Potenzialbarriere 65 erreicht wird. Beispielsweise kann ein SELV ("Separated Extra Low Voltage")-Bereich durch die Potenzialbarriere 65 von einer Eingangsseite der Zentraleinheit 60 getrennt sein, die mit einer Wechselspannungsquelle 61, typischerweise der Netzspannung, verbunden ist. Ein Ausgang 67 der Zentraleinheit 60 ist mit dem DC-Bus 3 verbunden. Eine Empfangseinheit 90 kann in die Zentraleinheit 60 integriert sein und dient zum Empfangen von digitalen Lichtsteuersignalen. Ein PLC-Modulator 66 ist mit der Empfangseinheit 90 und kann in die Zentraleinheit 60 integriert sein. Der PLC-Modulator 66 kann beispielsweise in einem DC-Ausgangskreis der Zentraleinheit 60 vorhanden sein.

Andere Ausgestaltungen der Quelle für die DC-Versorgungsspannung am DC-Bus 3 können verwendet werden. Beispielsweise kann die DC-Versorgungsspannung auch durch eine Batterie oder ein photovoltaisches Element bereitgestellt werden.

Die Betriebsschaltungen 10 und die mit ihnen jeweils verbundenen LED-Module mit den LEDs können auf unterschiedliche Weise ausgestaltet sein. Beispielsweise kann die Betriebsschaltung 10 in ein Betriebsgerät 70 mit einem Gehäuse angeordnet sein, das Ausgangsanschlüsse zur Verbindung mit dem LED-Modul 72 aufweist. Ein Eingang 71 des Betriebsgeräts 70 ist mit dem DC-Bus 3 verbunden.

Die Betriebsschaltung 10 und das von ihr versorgte LED-Modul mit LEDs 5 können auch in einem gemeinsamen Gehäuse 80 angeordnet sein. Die Betriebsschaltung 10 und das LED-Modul können einen gemeinsamen Träger aufweisen. Ein Eingang 81 der Betriebsschaltung 10 ist mit dem DC-Bus 3 verbunden. Die Betriebsschaltung 10 umfasst den PLC-Demodulator 19 (hier nicht dargestellt).

Weitere Abwandlungen der Betriebsschaltung 10 können bei weiteren Ausführungsbeispielen realisiert werden.

Figur 6 zeigt eine Betriebsschaltung 10 nach einem weiteren Ausführungsbeispiel, bei der der steuerbare Schalter 21 des DC/DC-Wandlers 21 ebenfalls in die integrierte Halbleiterschaltung 11 integriert ist. Die integrierte Halbleiterschaltung 11 kann den PLC-Demodulator 19 umfassen. Die integrierte Halbleiterschaltung 11 kann auch eine Treiberschaltung für den steuerbaren Schalter 21 umfassen. Der steuerbare Schalter 21 kann ein Leistungsschalter sein. Der steuerbare Schalter 21 kann ein MOSFET in der integrierten Halbleiterschaltung 11 umfassen.

Die integrierte Halbleiterschaltung 11 kann einen Ausgang 18 umfassen, der mit einer Induktivität 23 verbunden ist. Der Ausgang 18 kann mit einem Knoten zwischen der Diode 22 und der Induktivität 23 des DC/DC-Wandlers verbunden sein.

Die Betriebsschaltungen nach verschiedenen Ausführungsbeispielen können nicht nur für eine unidirektionale Kommunikation hin zur entsprechenden Betriebsschaltung eingerichtet sein, sondern auch für eine bidirektionale Kommunikation oder für eine unidirektionale Kommunikation, bei der Informationen von der Betriebsschaltung 10 übertragen werden. Beispiele für derartige Informationen umfassen Diagnoseinformationen, die irreguläre Betriebszustände oder Fehlerabschaltungen anzeigen können.

Weitere Beispiele für derartige Informationen umfassen die Übertragung von Messwerten, die mit einem Sensor in einem Betriebsgerät oder einem LED-Modul erfasst werden.

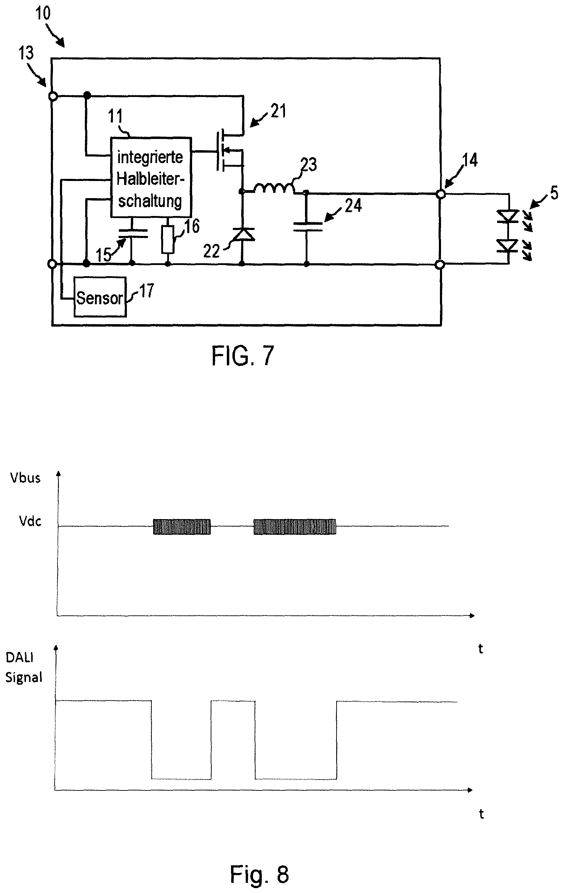

Figur 7 zeigt beispielhaft eine Betriebsschaltung 10, bei der die integrierte Halbleiterschaltung 11, die in diesem Beispiel den PLC-Demodulator 19 umfasst, mit einem Sensor 17 verbunden ist. Der Sensor 17 kann Messwerte in einem Betriebsgerät oder einem LED-Modul erfassen. Die Betriebsschaltung 10 kann abhängig von einem Ausgangssignal des Sensors 17 mittels des PLC-Demodulators 19 ein Signal über den DC-Bus übertragen. Beispielsweise kann die Betriebsschaltung Informationen über eine mit dem Sensor 17 erfasste Temperatur übertragen.

Zur Übertragung von Informationen durch die Betriebsschaltung 10 kann die integrierte Halbleiterschaltung 11 eingerichtet sein, um ein Signal auf die DC-Versorgungsspannung an dem DC-Bus aufzumodulieren. Die integrierte Halbleiterschaltung 11 kann einen PLC-Modulator 19 umfassen oder mit einem PLC-Demodulator 19 verbunden sein. Der PLC-Demodulator 19 kann eingerichtet sein, um Informationen in einem AC-Signal zu kodieren, das auf die DC-Versorgungsspannung an dem DC-Bus aufmoduliert wird.

Figur 8 zeigt beispielhaft die Übertragung von Steuersignalen über den DC-Bus. Dargestellt ist der Verlauf der Spannung auf dem DC-Bus 3 (oben) und der Verlauf eines DALI-Signales , welches von der Empfangseinheit 30 empfangen wird.

Die Steuersignale können in einer Folge von Binärwerten kodiert sein, wobei die Charakteristik der übertragengen Steuersignale, insbesondere die Bitfolge und die Datenrate, dem DALI-Protokoll entsprechen. Die Steuersignale sind vorzugweise derart kodiert, dass als Powerline-Signal (PLC-Signal) ein Lichtsteuersignal gemäß dem DALI-Standard, insbesondere aufweisend eine Übertragungsrate gemäß dem DALI-Standard. wie es von der Empfangseinheit 30 empfangen wurde, auf den DC-Bus 3 aufmoduliert wird. Vorzugsweise wird dabei das Steuersignal als Einhüllende des AC-Signals übertragen. Beispielsweise kann das PLC-Signal als hochfrequentes Signal in der Übertragungsrate der Einhüllenden der Bitlänge des von der Empfangseinheit 30 empfangenen digitalen Lichtsteuersignales entsprechen. Somit kann es ausreichend sein, dass der PLC-Demodulator 19 nur ausliest, ob und wie lange ein hochfrequentes Signal auf den DC-Bus 3 anliegt, ohne dass das hochfrequentes Signal an sich in seinem hochfrequenten Verlauf ausgewertet werden muß. Verschiedene Modulationstechniken können in dem System 1 eingesetzt werden. Vorzugsweise werden AC-Signale mit einer vorgegebenen Amplitude und vorgegebener Frequenz von dem PLC-Modulator 4 erzeugt. Die Frequenz der AC-Signale kann einen festen Wert aufweisen. Die AC-Signale können hochfrequente AC-Signale sein. Die Amplitude der AC-Signale kann klein im Vergleich zu der DC-Versorgungsspannung sein. Beispielsweise kann die Amplitude der aufmodulierten Steuersignale kleiner als 10 % oder kleiner als 5 % der DC-Versorgungsspannung. Die AC-Signale können Rechtecksignale, sinusförmige Signale oder dreiecksförmige Signale sein oder andere Signalformen aufweisen.

In dem Beispiel der Figur 8 wird durch den PLC-Modulator 4 ein hochfrequentes Signal auf den DC-Bus 3 aufmoduliert, welches in der Bitlänge der Einhüllenden des hochfrequenten Signales der Bitlänge des von der Empfangseinheit 30 empfangenen digitalen Lichtsteuersignales entspricht. Das hochfrequente Signal kann beispielsweise eine Frequenz im Bereich von 100 kHz bis 250 kHz aufweisen. In diesem Fall eines DALI Signals als Active Low Lichtsteuersignal wird auf den DC-Bus 3 ein Steuersignal aufmoduliert werden, wenn ein Bit mit LOW-Pegel, also niedrigem Pegel durch die Empfangseinheit 30 empfangen wurde. Für die Zeitdauer des LOW-Bits wird somit ein hochfrequentes Signal als Steuersignal auf den DC-Bus 3 aufmoduliert.

Während Ausführungsbeispiele unter Bezugnahme auf die Figuren beschrieben wurden, können Abwandlungen bei weiteren Ausführungsbeispielen realisiert werden. Beispielsweise kann eine Betriebsschaltung auch andere DC/DC-Wandler als einen Abwärtswandler umfassen.
Die Betriebsschaltung kann beispielsweise auch einen Aufwärtswandler, einen Inverswandler oder einen Sperrwandler umfassen. Es ist auch nicht unbedingt erforderlich, dass ein DC/DC-Wandler in der Betriebsschaltung vorgesehen ist. Beispielsweise könnte auch ein linearer Stromregler verwendet werden.

Die Steuersignale, die von dem PLC-Demodulator ausgelesen werden, müssen nicht notwendig von einer Zentraleinheit erzeugt werden. Beispielsweise können die hier beschriebenen Techniken auch für eine Informationsübertragung zwischen Betriebsgeräten verwendet werden, die mit demselben DC-Bus verbunden sind.

Vorrichtungen, Systeme und Verfahren nach Ausführungsbeispielen können bei Betriebsschaltungen für LEDs, beispielsweise bei LED-Konvertern, verwendet werden.

## Patentansprüche

1. Beleuchtungssystem, umfassend
ein Betriebsgerät (70, 80) für wenigstens eine Leuchtdiode (5),
ein LED-Modul (72), das mit dem Betriebsgerät (70, 80) verbunden ist,
eine Quelle (2; 60, 61), die eingerichtet ist, eine DC-Versorgungsspannung (41) bereitzustellen, einen DC-Bus (3), der das Betriebsgerät (70, 80) und die Quelle (2; 60, 61) verbindet,
eine Betriebsschaltung (10),
eine Empfangseinheit (30, 90) zum Empfangen von digitalen Lichtsteuersignalen gemäß einem vorgegebenen Protokoll, vorzugsweise gemäß dem DALI Standard, und
einen Modulator (4; 66) zum Aufmodulieren von Steuersignalen (42, 44) auf die DC-Versorgungsspannung (41),
**dadurch gekennzeichnet,**
**dass** der Modulator (4; 66) das Aufmodulieren der Steuersignale (42, 44) auf die DC-Versorgungsspannung (41) abhängig vom aktuellen Pegel der von der Empfangseinheit (30, 90) empfangenen digitalen Lichtsteuersignale durchführt, dass die Betriebsschaltung (10) eingerichtet ist, die DC-Versorgungsspannung (41) zu empfangen und einen LED-Strom für die wenigstens eine Leuchtdiode (5) bereitzustellen, wobei die Betriebsschaltung (10) umfasst:
einen PLC-Demodulator (19), der eingerichtet ist, die DC-Versorgungsspannung (41) aufmodulierten Steuersignale (42, 44) auszulesen und ein Signal auf die DC-Versorgungsspannung (41) aufzumodulieren,
eine integrierte Halbleiterschaltung (11), die eingerichtet ist, die von dem PLC-Demodulator (19) ausgelesenen Steuersignale (42,44) zu empfangen und die Betriebsschaltung (10) abhängig von den ausgelesenen Steuersignalen (42,44) zu steuern, wobei der PLC-Demodulator (19) eingerichtet ist, abhängig von einer Diagnose eines Betriebszustands und/oder abhängig von einem Ausgangssignal
eines Sensors (17) das Signal auf die DC-Versorgungsspannung (41) aufzumodulieren.

2. Beleuchtungssystem nach Anspruch 1,
wobei der Modulator (4; 66) ein Steuersignal (42, 44) mit hohem Pegel aufmoduliert, wenn das von der Empfangseinheit (30) empfangene digitale Lichtsteuersignal einen hohen Pegel aufweist.

3. Beleuchtungssystem nach Anspruch 1 oder 2,
wobei der Modulator (4; 66) ein Steuersignal (42, 44) mit niedrigem Pegel aufmoduliert, wenn das von der Empfangseinheit (30) empfangene digitale Lichtsteuersignal einen niedrigen Pegel aufweist.

4. Beleuchtungssystem nach einem der Ansprüche 1 bis 3,
wobei die integrierte Halbleiterschaltung (11) eingerichtet ist, einen steuerbaren Schalter (21) abhängig von den ausgelesenen Steuersignalen (42, 44) zu steuern.

5. Beleuchtungssystem nach Anspruch 4,
wobei die integrierte Halbleiterschaltung (11) eingerichtet ist, den steuerbaren Schalter (21) abhängig von den ausgelesenen Steuersignalen (42, 44) getaktet zu schalten.

6. Beleuchtungssystem nach Anspruch 5,
wobei eine Schaltfrequenz, Einschaltzeitpunkte und/oder Ausschaltzeitpunkte des steuerbaren Schalters (21) von den ausgelesenen Steuersignalen (42, 44) abhängt.

7. Beleuchtungssystem nach einem der Ansprüche 4 bis 6,
wobei die integrierte Halbleiterschaltung (11) einen Anschluss (17) umfasst, der mit dem steuerbaren Schalter (21) verbunden ist.

8. Beleuchtungssystem nach einem der Ansprüche 4 bis 6,
wobei die integrierte Halbleiterschaltung (11) einen steuerbaren Schalter (21) einer Wandlerschaltung (21-24) umfasst.

9. Beleuchtungssystem nach einem der Ansprüche 1 bis 8,
wobei die ausgelesenen Steuersignale (42, 44) wenigstens einen Parameter eines von der integrierten Halbleiterschaltung (11) gesteuerten Wandlers (12; 21-24) festlegen.

10. Beleuchtungssystem nach Anspruch 9,
wobei der Wandler (12; 21-24) ein von der integrierten Halbleiterschaltung (11) gesteuerter Stromregler ist.

11. Verfahren zum Betreiben wenigstens einer Leuchtdiode (5) mit einer Betriebsschaltung (10), die eine DC- Versorgungsspannung (41) empfängt und einen LED-Strom für die wenigstens eine Leuchtdiode (5) bereitstellt, wobei eine Quelle (2; 60, 61) die DC-Versorgungsspannung (41) über einen DC-Bus (3) bereitstellt,
wobei eine Empfangseinheit (30,90) digitale Lichtsteuersignale gemäß einem vorgegebenen Protokoll, vorzugsweise gemäß dem DALI Standard, empfängt und Steuersignale (42, 44) mittels eines Modulators (4; 66) auf die DC-Versorgungsspannung (41) abhängig vom aktuellen Pegel der empfangenen digitalen Lichtsteuersignale aufmoduliert werden,
wobei die Betriebsschaltung (10) einen PLC-Demodulator (19) und eine integrierte Halbleiterschaltung (11) umfasst, wobei das Verfahren umfasst:
Auslesen von den auf die DC-Versorgungsspannung (41) aufmodulierten Steuersignalen (42, 44) durch den PLC-Demodulator (19) und Weiterleiten der ausgelesenen Steuersignale (42, 44) an die integrierte Halbleiterschaltung (11),
Steuern der Betriebsschaltung (10) durch die integrierte Halbleiterschaltung (11) abhängig von den ausgelesenen Steuersignalen (42, 44), und
Aufmodulieren eines Signals auf die DC-Versorgungsspannung (41) durch den PLC-Demodulator (19) abhängig von einer Diagnose eines Betriebszustands und/oder abhängig von einem Ausgangssignal eines Sensors (17).

12. Verfahren nach Anspruch 11,
wobei das Steuern der Betriebsschaltung (10) umfasst:
Steuern eines steuerbaren Schalters (21) der Betriebsschaltung (10) zum Bereitstellen des LED-Stroms.

## Claims

1. A lighting system, comprising
an operating device (70, 80) for at least one light-emitting diode (5), an LED module (72), which is connected to the operating device (70, 80), a source (2; 60, 61), which is set up to provide a DC supply voltage (41),
a DC bus (3), which connects the operating device (70, 80) and the source (2; 60, 61), an operating circuit (10),
a receiving unit (30, 90) for receiving digital light control signals according to a predefined protocol, preferably according to the DALI standard, and
a modulator (4; 66) for modulating the control signals (42, 44) onto the DC supply voltage (41),
**characterized in**
**that** the modulator (4; 66) carries out the modulation of the control signals (42, 44) onto the DC supply voltage (41) depending on the current level of the digital light control signals received by the receiving unit (30, 90),
**that** the operating circuit (10) is set up to receive the DC supply voltage (41) and to provide an LED current for the at least one light-emitting diode (5), wherein the operating circuit (10) comprises:
A PLC demodulator (19), which is set up, to read out the DC supply voltage modulated control signals (42, 44) and to modulate a signal onto the DC supply voltage (41), an integrated semi-conductor circuit (11), which is set up, to receive the control signals (42, 44) read-out by the PLC demodulator (19) and to control the operating circuit (10) depending on the control signals (42, 44) read-out,
wherein the PLC demodulator (19) is set up, depending on the diagnosis of an operating state and/or depending on an output signal of a sensor (17) to modulate the signal onto the DC supply voltage (41).

2. A lighting system according to Claim 1,
wherein the modulator (4; 66) modulates a control signal (42, 44) at a high level, if the digital light control signal received by the receiving unit (30) has a high level.

3. A lighting system according to Claim 1 or 2,
wherein the modulator (4; 66) modulates a control signal (42, 44) at a low level, if the digital light control signal received by the receiving unit (30) has a low level.

4. A lighting system according to any one of claims 1 to 3,
wherein the integrated semiconductor circuit (11) is set up, to control a controllable switch (21) depending on the control signals (42, 44) read out.

5. A lighting system according to Claim 4,
wherein the integrated semi-conductor circuit (11) is set up, to switch the controllable switch (21) in a clocked manner depending on the control signals (42, 44) read out.

6. A lighting system according to Claim 5,
wherein a switching frequency, switching-on times and/or switching-off times of the controllable switch (21) depends on the control signals (42, 44) read out.

7. A lighting system according to any one of Claims 4 to 6,
wherein the integrated semiconductor circuit (11) comprises a connection (17), which is connected to the controllable switch (21).

8. A lighting system according to any one of Claims 4 to 6, wherein the integrated semiconductor circuit (11) comprises a controllable switch (21) of a converter circuit (21-24).

9. A lighting system according to any one of Claims 1 to 8,
wherein the control signals (42, 44) read out define at least one parameter of a converter (12; 21-24) controlled by the integrated semiconductor circuit (11).

10. A lighting system according to Claim 9,
wherein the converter (12; 21-24) is a current regulator controlled by the integrated semiconductor circuit (11).

11. A method for operating at least one light-emitting diode (5), with an operating circuit (10), which receives a DC supply voltage (41) and provides an LED current for the at least one light-emitting diode (5), wherein a source (2; 60, 61) provides the DC supply voltage (41) via a DC bus (3),
wherein a receiving unit (30, 90)
receives digital light control signals according to a predetermined protocol, preferably according to the DALI standard, and control signals (42, 44) are modulated by means of a modulator (4; 66) onto the DC supply voltage (41) depending on the current level of the received digital light control signals,
wherein the operating circuit (10) comprises a PLC demodulator (19) and an integrated semiconductor circuit (11), wherein the method comprises:
Reading out the control signals (42, 44) modulated onto the DC supply voltage (41) by the PLC demodulator and forwarding the control signals (42, 44) read out to the integrated semiconductor circuit (11),
control of the operating circuit (10) by the integrated semiconductor circuit (11) depending on the control signals (42, 44) read out, and
modulating a signal onto the DC supply voltage (41) by the PLC demodulator (19) depending on a diagnosis of an operating state and/or depending on an output signal of a sensor (17).

12. A method according to Claim 11,
wherein the control of the operating circuit (10) comprises:
Control of a controllable switch (21) of the operating circuit (10) to provide the LED current.

## Revendications

1. Système d'éclairage comprenant
un appareil de commande (70, 80) pour au moins une diode électroluminescente (5),
un module à LED (72), qui est relié avec l'appareil de commande (70, 80), une source (2 ; 60, 61) qui est conçue pour mettre à disposition une tension d'alimentation DC (41),
un bus DC (3) qui relie l'appareil de commande (70, 80) et la source (2 ; 60, 61), un circuit de commande (10),
une unité de réception (30, 90) pour la réception de signaux de commande d'éclairage numériques selon un protocole prédéterminé, de préférence selon le standard DALl et
un modulateur (4 ; 66) pour la modulation de signaux de commande (42, 44) sur la tension d'alimentation DC (41),
**caractérisé en ce que**
le modulateur (4 ; 66) effectue la modulation des signaux de commande (42, 44) sur la tension d'alimentation DC (41) en fonction du niveau actuel des signaux de commande d'éclairage numériques reçus par l'unité de réception (30, 90),
**en ce que** le circuit de commande (10) est conçu pour recevoir la tension d'alimentation DC (41) et de mettre à disposition un courant de LED pour l'au moins une diode électroluminescente (5), le circuit de commande (10) comprenant :
un démodulateur PLC (19) qui est conçu pour lire les signaux de commande (42, 44) modulés sur la tension d'alimentation DC (41) et moduler un signal sur la tension d'alimentation DC (41),
un circuit semi-conducteur intégré (11) qui est conçu pour recevoir les signaux de commande (42, 44) lus par le démodulateur PLC (19) et pour contrôler le circuit de commande (10) en fonction des signaux de commande (42, 44) lus,
le démodulateur PLC (19) étant conçu pour moduler le signal sur la tension d'alimentation DC (41) en fonction d'un diagnostic d'un état de fonctionnement et/ou en fonction d'un signal de sortie d'un capteur (17).

2. Système d'éclairage selon la revendication 1,
le modulateur (4 ; 66) modulant un signal de commande (42, 44) avec un niveau élevé lorsque le signal de commande d'éclairage numérique reçu par l'unité de réception (30) présente un niveau élevé.

3. Système d'éclairage selon la revendication 1 ou 2,
le modulateur (4 ; 66) modulant un signal de commande (42, 44) avec un niveau faible lorsque le signal de commande d'éclairage numérique reçu par l'unité de réception (30) présente un niveau faible.

4. Système d'éclairage selon l'une des revendications 1 à 3,
le circuit semi-conducteur intégré (11) étant conçu pour contrôler un commutateur contrôlable (21) en fonction des signaux de commande (42, 44) lus.

5. Système d'éclairage selon la revendication 4,
le circuit semi-conducteur intégré (11) étant conçu pour commuter de manière cadencée le commutateur contrôlable (21) en fonction des signaux de commande (42, 44) lus.

6. Système d'éclairage selon la revendication 5,
une fréquence de commutation, des moments d'activation et/ou des moments de désactivation du commutateur contrôlable (21) dépendant des signaux de commande (42, 44) lus.

7. Système d'éclairage selon l'une des revendications 4 à 6,
le circuit semi-conducteur intégré (11) comprenant un raccord (17) qui est relié avec le commutateur contrôlable (21).

8. Système d'éclairage selon l'une des revendications 4 à 6,
le circuit semi-conducteur intégré (11) comprenant un commutateur contrôlable (21) d'un circuit convertisseur (21 - 24).

9. Système d'éclairage selon l'une des revendications 1 à 8,
les signaux de commande (42, 44) lus déterminant au moins un paramètre d'un convertisseur (12 ; 21 - 24) contrôlé par le circuit semi-conducteur intégré (11).

10. Système d'éclairage selon la revendication 9,
le convertisseur (12 ; 21 - 24) étant un régulateur de courant contrôlé par le circuit semi-conducteur intégré (11).

11. Procédé de commande d'au moins une diode électroluminescente (5) avec un circuit de commande (10), qui reçoit une tension d'alimentation DC (41) et qui met à disposition un courant de LED pour l'au moins une diode électroluminescente (5), une source (2 ; 60, 61) mettant à disposition la tension d'alimentation DC (41) par l'intermédiaire d'un bus DC (3),
une unité de réception (30, 90) recevant des signaux de commande d'éclairage numérique selon un protocole prédéterminé, de préférence selon le standard DALl et les signaux de commande (42, 44) étant modulés au moyen d'un modulateur (4 ; 66) sur la tension d'alimentation DC (41) en fonction du niveau actuel des signaux de commande d'éclairage numériques reçus,
le circuit de commande (10) comprenant un démodulateur PLC (19) et un circuit semi-conducteur intégré (11), ce procédé comprenant :
la lecture des signaux de commande (42, 44) modulés sur la tension d'alimentation DC (41) par le démodulateur PLC (19) et la transmission des signaux de commande (42, 44) lus au circuit semi-conducteur intégré (11),
le contrôle du circuit de commande (10) par le circuit semi-conducteur intégré (11) en fonction des signaux de commande (42, 44) lus et
la modulation d'un signal sur la tension d'alimentation DC (41) par le démodulateur PLC (19) en fonction d'un diagnostic d'un état de fonctionnement et/ou en fonction d'un signal de sortie d'un capteur (17).

12. Procédé selon la revendication 11,
le contrôle du circuit de commande (10) comprenant :
le contrôle d'un commutateur contrôlable (21) du circuit de commande (10) pour la mise à disposition du courant de LED.
